Europäisches Patentamt

European Patent Office

Office européen des brevets

(11) Veröffentlichungsnummer: **0 042 812**
**A1**

(12) ## EUROPÄISCHE PATENTANMELDUNG

(21) Anmeldenummer: **81810226.1**

(22) Anmeldetag: **09.06.81**

(51) Int. Cl.³: **G 02 B 23/12**
**G 02 B 27/14**

(30) Priorität: **20.06.80 CH 4749/80**

(43) Veröffentlichungstag der Anmeldung:
**30.12.81 Patentblatt 81/52**

(84) Benannte Vertragsstaaten:
**DE GB IT NL**

(71) Anmelder: **KERN & CO. AG Werke für Präzisionsmechanik Optik und Elektronik**

**CH-5001 Aarau(CH)**

(72) Erfinder: **Zürcher, Walter**
**Birkenweg 6**
**CH-5000 Aarau(CH)**

(74) Vertreter: **Seeger, Jan**
**c/o Kern & Co. AG**
**CH-5001 Aarau(CH)**

(54) **Binokulares Nachtfernrohr.**

(57) Durch Verwendung eines binokularen Teleskopsystems (6 bis 11), das aus einem Objektiv (6) einem hochbrechenden Prismensystem (8, 9) mit Brechzahl oberhalb 1,65 und einem physikalischen Strahlenteiler (7), sowie zwei Okularen (10, 11) aufgebaut ist wird ein leichtes, schlankes und kostengünstiges Instrument möglich. Infolge annähernd gleicher freier Linsendurchmesser im Teleskopsystem vor und hinter dem Prismensystem (8, 9) werden die Prismen (8, 9) optimal ausgenutzt.

EP 0 042 812 A1

- 1 -

Binokulares Nachtfernrohr
_____

Die Erfindung betrifft ein binokulares Nachtfernrohr mit nur einer
Bildverstärkerröhre, einem Frontobjektiv zur Abbildung des Objektes
auf die Photokathode der Röhre, einem Kollimationsobjektiv zur Abbildung des Bildschirmes der Röhre ins Unendliche und einem binokularen Teleskopsystem, das aus einem weiteren Objektiv, einem
Strahlteilersystem und zwei Okularen aufgebaut ist.

Derartige Nachtfernrohre sind bekannt. Bei einer Ausführungsform
(CH-Patent 439 781 (N.V. Oude Delft)) ist das zweiäugige Teleskopsystem aus zwei Hälften zusammengesetzt, von denen jede einen geometrisch getrennten Teil der das Kollimationsobjektiv verlassenden
parallelen Strahlen aufnimmt und aus einem Porro-Prismensystem
erster Art, einem zwischen den Prismen angeordneten Objektiv und
einem auf der Austrittsseite des zweiten Prismas angeordneten Okular
aufgebaut ist.

Bekannte Systeme mit derartigen Binokulareinblicken besitzen optisch aufwendige und teuere Aufbauten. Das dem Bildschirm des Bildwandlers oder Bildverstärkers nachfolgende Kollimatorobjektiv, welches das verstärkte Bild ins Unendliche projiziert, benötigt aufgrund der nachfolgenden geometrischen Strahlentrennung eine relativ grosse Apertur. Der Durchmesser der Austrittspupille des Kollimatorobjektivs muss mehr als doppelt so gross sein, wie der Durchmesser der Eintrittspupille jedes einzelnen nachfolgenden Teleskopsystems. Ausserdem müssen die Bildfehler des Kollimators sehr gut korrigiert sein und bleiben, was einen mechanisch hochwertigen Objektivaufbau bedingt. Eine vorhandene sphärische Aberration ergibt beim bekannten Aufbau eine astigmatische Unschärfe in der Bildmitte, die nicht wie bei zentrierten Systemen durch andere Glieder des optischen Systems kompensierbar ist. Geeignete Kollimatorobjektive erfordern also neben dem genannten grossen Pupillendurchmesser auch noch eine grosse Zahl sehr genau gefertigter und zentrierter Linsen, die das Gesamtsystem verteuern.

Aufgabe der Erfindung ist es daher, ein binokulares Nachtfernrohr mit einem Einblick anzugeben, der einen leichteren und kleineren Aufbau, sowie eine kostengünstigere Produktion erlaubt.

Diese Aufgabe wird bei einem binokularen Nachtfernrohr der eingangs genannten Art dadurch gelöst, dass das Strahlteilersystem mit einem physikalischen Strahlenteiler und einem Prismensystem aufgebaut ist, dessen Brechzahl oberhalb 1,65 liegt und dass die freien Linsendurchmesser im Teleskopsystem vor und nach dem Prismensatz etwa gleich gross sind (Differenz kleiner als 20 %).

- 3 -

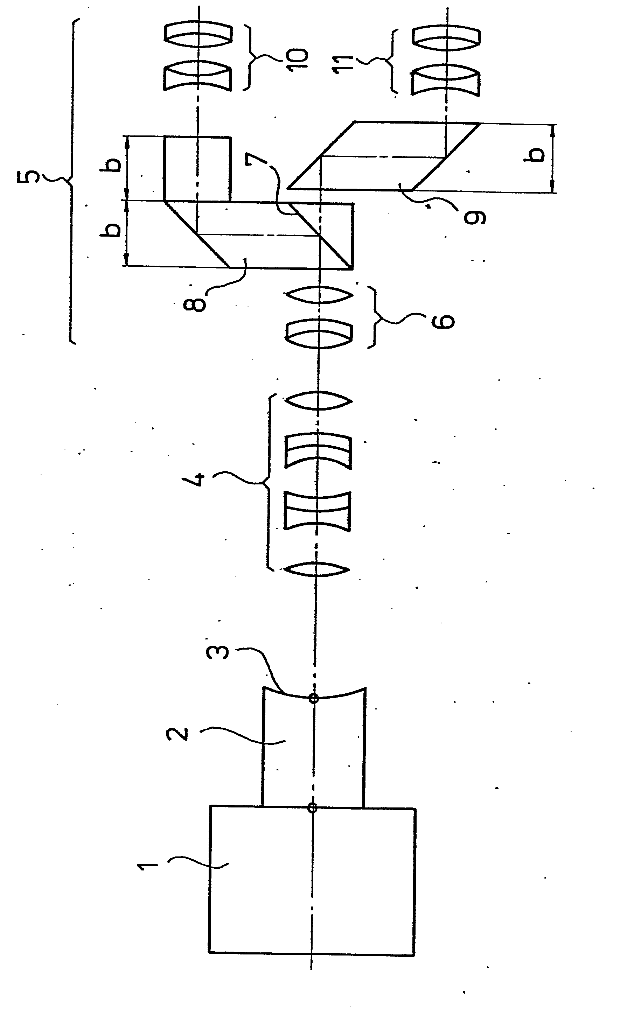

Ein Ausführungsbeispiel des erfindungsgemässen Nachtfernrohrs wird nachfolgend anhand der Zeichnung beschrieben. Sie zeigt in der Figur ein teilweise im Längsschnitt dargestelltes optisches Schema des Nachtfernrohres.

Das in der Figur dargestellte Nachtfernrohr besitzt ein Frontobjektiv 1 mit nachgeschalteter Bildverstärker- oder Bildwandlerröhre 2. Der Bildschirm 3 der Röhre 2 wird durch ein Kollimatorobjektiv 4 ins Unendliche projiziert. Auf das Objektiv 4 folgt im Strahlengang ein binokulares Teleskopsystem 5, welches aus einem beiden Hälften gemeinsamen Objektiv 6, einem physikalischen Strahlteiler 7, zwei Umlenkprismen 8, 9 und einem rechten und einem linken Okular 10 und 11 aufgebaut ist. Die Prismen 8 und 9 bestehen aus Glas mit einem Brechungsindex n grösser als 1,65.

Mit diesem Aufbau können folgende Abmessungen erreicht werden:

Freier Durchmesser des Objektivs 4 austrittsseitig : 19 mm,

Freier Durchmesser des Objektivs 6 prismenseitig  : 19,5 mm,

Freier Durchmesser der Okulare 10, 11 prismenseitig: 22,5 mm,

Durchmesser der Zwischenbilder zwischen den Umlenkprismen 8, 9

und den Okularen 10, 11                            : 18,5 mm und

Breite b der Umlenkprismen 8, 9                    : 20 mm .

Der Durchmesser der Linsen des Kollimatorobjektivs 4 ist also gegenüber den bekannten Systemen mit Pupillenteilung um mehr als die Hälfte

- 4 -

verringert, und wegen der konzentrischen Lage aller Linsen kann das Gesamtsystem zur Korrektur herangezogen werden. Die annähernde Gleichheit der prismenseitigen freien Durchmesser von Objektiv 6 und Okularen 10 und 11 ermöglicht einen einfachen Aufbau und eine optimale Ausnutzung der Prismen 8 und 9.

Infolge des relativ hohen Brechungsindex n grösser als 1,65 für die Prismen 8 und 9 genügt zur Realisierung des notwendigen optischen Weges ein geometrisch kurzer Glasweg. Damit wird auch die Brennweite des Objektivs 6 klein, ebenso wie die Brennweite des Objektivs 4, wenn man von einer konstanten, durch das Brennweitenverhältnis gegebenen Vergrösserung ausgeht. Man erhält also einen kurzen und leichten Aufbau des Gesamtsystems. Ausserdem ist infolge der auftretenden Totalreflexion eine Verspiegelung der Reflexionsflächen der Prismen 8, 9 entbehrlich, was wiederum Kosten und Lichtverluste einspart.

Patentanspruch

Binokulares Nachtfernrohr mit nur einer Bildverstärkerröhre, einem
Frontobjektiv zur Abbildung des Objektes auf die Photokathode der
Röhre, einem Kollimationsobjektiv zur Abbildung des Bildschirmes
der Röhre ins Unendliche und einem binokularen Teleskopsystem, das
aus einem weiteren Objektiv, einem Strahlteilersystem und zwei
Okularen aufgebaut ist, dadurch gekennzeichnet, dass das Strahlteilersystem mit einem physikalischen Strahlenteiler (7) und einem
Prismensystem (8, 9) aufgebaut ist, dessen Brechzahl oberhalb 1,65
liegt und dass die freien Linsendurchmesser im Teleskopsystem (6, 8,
9, 10, 11) vor und nach dem Prismensatz (8, 9) etwa gleich gross
sind.

1

2

3

4

5

6

7

8

9

10

11

b    b

b

0042812

0042812

Nummer der Anmeldung

**Europäisches Patentamt**

**EUROPÄISCHER RECHERCHENBERICHT**

EP 81 81 0226

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | <u>DE - C - 596 913</u> (C. ZEISS)<br>* Seite 2, Zeilen 19-99; Patent-<br>anspruch; Figuren 1-3 * | 1 | G 02 B 23/12<br>27/14 |
| | -- | | |
| | <u>DE - B - 1 217 099</u> (C. ZEISS)<br>* Patentansprüche; Figuren 1,2,4,<br>6 * | 1 | |
| | -- | | |
| P | <u>DE - A - 3 010 307</u> (OLYMPUS)<br>* Patentansprüche 1,2; Figuren<br>1-3 * | 1 | **RECHERCHIERTE SACHGEBIETE (Int. Cl.³)** |
| | -- | | G 02 B 23/12<br>27/14<br>5/04<br>27/10<br>23/18 |
| AD | <u>CH - A - 439 781</u> (OUDE DELFT)<br>* Patentanspruch; Figur 5 * | 1 | |
| | -- | | |
| A | <u>DE - A - 1 572 645</u> (ELTRO)<br>* Patentansprüche * | 1 | |
| | -- | | |
| A | <u>DE - B - 1 181 338</u> (OUDE DELFT)<br>* Spalte 4; Zeilen 14-66 * | 1 | **KATEGORIE DER GENANNTEN DOKUMENTE** |
| | ----- | | |

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

| | | | |
|---|---|---|---|
| Der vorliegende Recherchenbericht wurde für alle Patentansprüche erstellt. | | | |
| Recherchenort<br>Den Haag | Abschlußdatum der Recherche<br>22-09-1981 | Prüfer<br>PFAHLER | |

EPA form 1503.1  06.78